# EUROPEAN PATENT SPECIFICATION

(11) **EP 3 840 497 B1**
(45) Date of publication and mention of the grant of the patent: **15.11.2023**
(21) Application number: 18941811.4
(22) Date of filing: 30.11.2018
(51) Int. Cl.: H04W 76/14, H04W 76/15, H04W 92/18

(54) **WIRELESS COMMUNICATION METHOD, COMPUTER READABLE STORAGE MEDIUM AND TERMINAL DEVICE**
DRAHTLOSKOMMUNIKATIONSVERFAHREN, COMPUTERLESBARES SPEICHERMEDIUM UND ENDGERÄT
PROCÉDÉ DE COMMUNICATION SANS FIL, SUPPORT DE STOCKAGE LISIBLE PAR ORDINATEUR ET DISPOSITIF TERMINAL

(43) Date of publication of application: 23.06.2021
(73) Proprietor: GUANGDONG OPPO MOBILE TELECOMMUNICATIONS CORP., LTD., Dongguan Guangdong 523860 (CN)
(72) Inventor: LU, Qianxi, Dongguan, Guangdong 523860 (CN); ZHAO, Zhenshan, Dongguan, Guangdong 523860 (CN); LIN, Huei-Ming, South Yarra, Victoria 3141 (AU)
(74) Representative: Ipside
(86) International application number: PCT/CN2018/118614
(87) International publication number: WO 2020/107412

(56) References cited:
- CN-A- 107 041 002
- CN-A- 107 889 073
- CN-A- 108 024 338
- OPPO: "Discussion on resource allocation mode for NR-V2X", 3GPP DRAFT; R2-1816338 - DISCUSSION ON RESOURCE ALLOCATION MODE FOR NR-V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Spokane, US; 20181112 - 20181116 12 November 2018 (2018-11-12), XP051555929, Retrieved from the Internet: URL:http://www.3gpp.org/ftp/Meetings%5F3GP P%5FSYNC/RAN2/Docs/R2%2D1816338%2Ezip [retrieved on 2018-11-12]
- INTEL ERICSSON III HUAWEI HISILICON NOKIA ALCATEL LUCENT SHANGHAI BELL CATT ITRI LGE SAMSUNG: "Harmonized WF on Priority Support for V2V Communication", 3GPP DRAFT; R1-163879 - INTEL WF ON PRIORITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, South Korea; 20160411 - 20160415 18 April 2016 (2016-04-18), XP051088960, Retrieved from the Internet: URL:http://www.3gpp.org/ftp/tsg_ran/WG1_RL 1/TSGR1_84b/Docs/ [retrieved on 2016-04-18]
- Huawei et al: "Sidelink Resource Allocation Mechanism for NR V2X", 3GPP Draft; R1-1810140, 12 October 2018 (2018-10-12), pages 1-10, XP051517555, Chengdu, China

## Description

### TECHNICAL FIELD

Embodiments of the present application relate to the field of communications, and more specifically, to a wireless communication method, a computer readable storage medium and a terminal device.

### BACKGROUND

An internet of vehicles system is a sidelink (SL) transmission technology based on long term evolution vehicle to vehicle (LTE D2D). Different from an approach in a traditional LTE system that communication data is received or sent through a base station, the internet of vehicles system adopts an approach of device-to-device direct communication, and thus has a higher spectral efficiency and a lower transmission delay.

In 3rd generation partnership project (3GPP) Rel-14, vehicle to everything (V2X) in the internet of vehicles technology was standardized, and two transmission modes were defined: a mode 3 and a mode 4. In addition, in 3GPP Rel-16, V2X technology was introduced into NR. In addition to the above-described mode 3/4 (called a mode 1/2 in NR-V2X), other modes were also introduced. However, as the transmission demand increases, a single transmission mode cannot meet the data transmission demand.

Therefore, there is an urgent need for a data transmission solution in this field to improve the efficiency of data transmission. Further prior art can be found from OPPO in the document "Discussion on resource allocation mode for R-V2X", 3GPP DRAFT, R2-1816338 and from Intel et al. in the document "Harmonized WF on Priority Support for V2V Communication", 3GPP DRAFT; R1-163879.

### SUMMARY

A wireless communication method, computer readable storage medium and a terminal device are provided, which can effectively improve the efficiency of data transmission.

The invention is carried out according to the appended independent claims. Optional features of the invention are carried out according to the dependent claims.

### BRIEF DESCRIPTION OF DRAWINGS

FIG. 1 is a schematic frame diagram of a transmission mode;
FIG. 2 is a schematic frame diagram of another transmission mode;
FIG. 3 is a schematic block diagram of a scenario;
FIG. 4 is a schematic flowchart of a wireless communication method according to a part of invention;
FIG. 5 is a schematic block diagram of a terminal device;
FIG. 6 is another schematic block diagram of a terminal device;
FIG. 7 is a schematic block diagram of a chip.

### DESCRIPTION OF EMBODIMENTS

The technical solutions in embodiments of the present application will be described below in conjunction with the accompanying drawings.

The embodiments of the present application can be applied to any communication framework of terminal device to terminal device.

For example, vehicle to vehicle (V2V), vehicle to everything (V2X), device to device (D2D), etc.

A terminal in the embodiments of the present application may be any device or apparatus configured with a physical layer and a media access control layer, where a terminal device may also be referred to as an access terminal, for example, a user equipment (UE), a user unit, a user station, a mobile radio station, a mobile station, a remote station, a remote terminal, a mobile device, a user terminal, a terminal, a wireless communication device, a user agent or a user apparatus. The access terminal may be a cellular phone, a cordless phone, a session initiation protocol (SIP) phone, a wireless local loop (WLL) station, a personal digital processing (PDA), a handheld device having a wireless communication function, a computing device having a wireless communication function or other processing device which is connected to a wireless modem and has a wireless communication function, a vehicle-mounted device, a wearable device, etc. The embodiments of the present application take a vehicle-mounted terminal as an example, but are not limited thereto.

Optionally, in some embodiments of the present application, the embodiments of the present application may be applicable to a scenario where multiple transmission modes exist simultaneously, for example, a transmission mode 3 and a transmission mode 4 defined in the 3rd generation partnership project (3GPP) Rel-14, and a transmission mode defined in Rel-16.

It should be understood that the above-described transmission mode 3 may also be referred to as a mode 1 in NR-V2X, and the above-described transmission mode 4 may also be referred to as a mode 2 in NR-V2X, which is not specifically limited in the embodiments of the present application.

To facilitate understanding of the embodiments of the present application, the above-described modes are briefly described below.

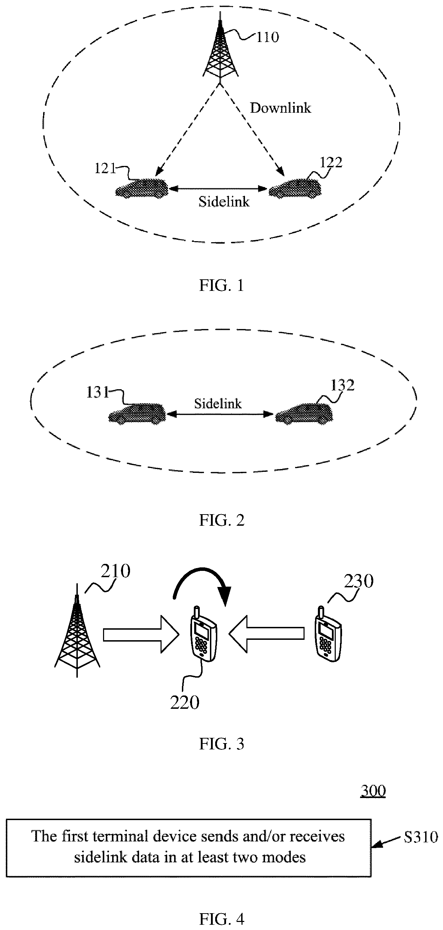

FIG. 1 is a schematic diagram of a mode 3 according to an embodiment of the present application. FIG. 2 is a schematic diagram of a mode 4 according to an embodiment of the present application.

In the transmission mode 3 shown in FIG. 1, transmission resources of vehicle-mounted terminals (a vehicle-mounted terminal 121 and a vehicle-mounted terminal 122) are allocated by a base station 110, and the vehicle-mounted terminals send data on a sidelink according to the resources allocated by the base station 110. Specifically, the base station 110 may allocate resources for a single transmission to the terminals, or allocate resources for semi-static transmission to the terminals.

In the transmission mode 4 shown in FIG. 2, vehicle-mounted terminals (a vehicle-mounted terminal 131 and a vehicle-mounted terminal 132) adopt a transmission manner of sensing and reservation, and the vehicle-mounted terminals autonomously select transmission resources on sidelink resources to perform data transmission.

The following takes the vehicle-mounted terminal 131 as an example for specific description.

The vehicle-mounted terminal 131 obtains a set of available transmission resources in a resource pool by means of sensing, and the vehicle-mounted terminal 131 randomly selects a resource from the set to perform data transmission.

Since services in the internet of vehicles system have periodic characteristics, in embodiments of the present application, the vehicle-mounted terminal 131 may also adopt a semi-static transmission manner. That is, after the vehicle-mounted terminal 131 selects a transmission resource, the resource is continuously used in multiple transmission cycles to reduce the probability of resource reselection and resource conflict.

Further, the vehicle-mounted terminal 131 may carry information for reserving resources for the next transmission in control information transmitted this time, so that other terminals (for example, the vehicle-mounted terminal 132) can judge whether this resource is reserved and used by a user through detecting the control information of the user, to achieve an object of reducing resource conflict.

A mode introduced into Rel-16 refers to that one UE can control sidelink sending and/or receiving of another UE. For example, with reference to FIG. 2, sidelink sending and/or receiving of the vehicle-mounted terminal 132 may be controlled by the vehicle-mounted terminal 131. For another example, sidelink sending and/or receiving of the vehicle-mounted terminal 131 may be controlled by the vehicle-mounted terminal 132.

FIG. 3 is a schematic block diagram of a scenario according to an embodiment of the present application.

As shown in FIG. 3, a first terminal device 220 can simultaneously establish connections with a network device 210 and a second terminal device 230.

The first terminal device 220 can be in multiple modes at the same time. For example, the first terminal device 220 can be in the transmission mode 3 as shown in FIG. 1 through the network device 210; the first terminal device 220 can also be in the transmission mode 4 as shown in FIG. 2 through the second terminal device 230; and the first terminal device 220 can also be in the mode introduced into Rel-16.

In this case, the existing data transmission scheme cannot meet data transmission requirements. For example, there is currently no technical solution of how to perform data sending and receiving when the first terminal device 220 is in multiple modes simultaneously.

The technical solutions of the embodiments of the present application can enable the first terminal device 220 to effectively receive and/or send sidelink data.

It should be understood that the transmission mode 3 and the transmission mode 4 as well as the mode introduced into Rel-16 in the above-described embodiments are only examples of the embodiments of the present application, and the embodiments of the present application are not limited thereto. For example, in other alternative embodiments, a new transmission mode may also be defined.

FIG. 4 is a schematic flowchart of a wireless communication method 300 according to part of invention of the present application. The method 30, in the invention, is by a terminal device. For example, a first terminal device shown in FIG. 4 may be the terminal device shown in FIG. 3.

As shown in FIG. 4, part of invention method 300 includes:
S310: the first terminal device sends and/or receives sidelink data in at least two modes.

Specifically, the first terminal device can determine different modes according to different sidelink data, and then send and/or receive corresponding sidelink data based on the different modes, thereby being able to effectively improve the efficiency of data transmission.

The at least two modes include at least two of the following modes:
sending and/or receiving of the sidelink data of the first terminal device is configured and/or scheduled by a network device; the sending and/or receiving of the sidelink data of the first terminal device is configured and/or scheduled by the first terminal device; the sending and/or receiving of the sidelink data of the first terminal device is configured and/or scheduled by a second terminal device.

For example, the at least two modes may include the transmission mode 3, the transmission mode 4 and the mode introduced into Rel-16 in the above-described embodiments.

The following describes in detail implementations of the first terminal device determining different modes for different data.

In the invention, the at least two modes are used to send and/or receive sidelink data under different situations, respectively.

In other words, different transmission modes correspond to sidelink data in different situations.

The sidelink data under different situations includes:
sidelink data under different situations of any one of a propagation mode, a destination address, a source address, a provider service identification (PSID), an intelligent transportation systems application identification (ITS-AID), an access mode, a bearer, a logical channel, a channel condition, a speed, a synchronization type and a carrier.

For example, the at least two modes are respectively used to send and/or receive sidelink data under different situations of the propagation mode.

In other words, the at least two modes are respectively used to send and/or receive sidelink data in different propagation modes.

Specifically, different situations of the propagation mode may include a unicast propagation mode, a multicast propagation mode and a broadcast propagation mode. Assuming that the at least two modes may include a first mode, a second mode and a third mode, the above-described three modes may be used to transmit sidelink data in the above-described three broadcasting modes, respectively. For example, the first mode is used to transmit sidelink data in the unicast propagation mode, the second mode is used to transmit sidelink data in the multicast propagation mode, and the third mode is used to transmit sidelink data in the broadcast propagation mode.

For another example, the at least two modes are respectively used to send and/or receive sidelink data under different situations of the access mode.

In other words, the at least two modes are respectively used to send and/or receive sidelink data in different access modes.

Specifically, the access mode may include a first access mode and a second access mode. For example, the first access mode is to transmit data by means of accessing a network through long term evolution (LTE), and the second access mode is to transmit data by means of accessing a network through new radio (NR). Assuming that the at least two modes may include a first mode, a second mode and a third mode, the above-described three modes may be used to transmit sidelink data in the above-described two access modes, respectively. For example, the first mode and the second mode are used to transmit sidelink data in the first access mode, and the third mode is used to transmit sidelink data in the second access mode.

It should be understood that the above-described embodiments are to divide the sidelink data of the first terminal device into sidelink data under different situations based on one factor, and should not be construed as a specific limitation to the embodiments of the present application.

For example, in other alternative embodiments, the sidelink data of the first terminal device may be divided into sidelink data under different situations based on multiple factors.

In other words, the at least two modes may be used to send and/or receive sidelink data under different situations, where the sidelink data under different situations may include sidelink data under different situations of more than one of a propagation mode, a destination address, a source address, a PSID, an ITS-AID, an access mode, a bearer, a logical channel, a channel condition, a speed, a synchronization type and a carrier.

For example, the at least two modes are respectively used to send and/or receive sidelink data with different propagation modes and different access modes.

Specifically, different situations of the propagation mode may include a unicast propagation mode, a multicast propagation mode and a broadcast propagation mode. The access mode may include a first access mode and a second access mode. Assuming that the at least two modes may include a first mode, a second mode and a third mode, the first mode is used to transmit sidelink data which is in the first access mode and transmitted through the unicast propagation mode, the second mode is used to transmit sidelink data which is in the first access mode and transmitted through the multicast propagation mode or the broadcast propagation mode, and the third mode is used to transmit sidelink data which is in the second access mode and transmitted through any propagation mode.

It should be understood that the above-described PSID and ITS-AID are only examples of application identifications, and should not be construed as a limitation to the embodiments of the present application. For example, in other alternative embodiments, other identifications may be used to divide the sidelink data of the first terminal device, so that the at least two modes are used to transmit sidelink data under different identifications.

It should also be understood that the embodiments of the present application do not specifically limit the different situations of the propagation mode, the destination address, the source address, the PSID, the ITS-AID, the access mode, the bearer, the logical channel, the channel condition, the speed, the synchronization type and the carrier.

For example, different situations of the propagation mode may be different existing propagation modes or newly defined propagation modes.

For another example, different situations of the synchronization type may be different situations of a synchronization object, or different situations of a synchronization mode. For example, the different situations of the synchronization type may include different synchronization network types.

It should be noted that the first terminal device in the embodiments of the present application can send and/or receive sidelink data in at least two modes, but due to a limitation of capability and other factors of the first terminal device, before sending and/or receiving the sidelink data, the terminal device needs to determine in advance a sending order or a receiving order of the sidelink data.

The specific implementations of the first terminal device sending and/or receiving sidelink data in the at least two modes are described in detail below.

### Embodiment 1:

In the embodiment of the present application, the first terminal device can send and/or receive the sidelink data in the at least two modes according to priority information.

Optionally, the first terminal device can determine the priority information according to the at least two modes before sending and/or receiving the sidelink data.

For example, before sending and/or receiving the sidelink data, the first terminal device can determine the priority information according to a priority corresponding to each of the at least two modes. Specifically, each of the at least two modes may correspond to a priority, and then the first terminal device can send and/or receive sidelink data in a corresponding mode according to the priority corresponding to each of the at least two modes.

In other words, the priority information may include priority information corresponding to each of the at least two modes.

Optionally, the first terminal device can determine the priority information according to the sidelink data before sending and/or receiving the sidelink data.

For example, before sending and/or receiving the sidelink data, the first terminal device can determine the priority information according to a priority corresponding to a quality of service (QoS) of the sidelink data. Specifically, the first terminal device can determine the sending and/or receiving order of the sidelink data according to the priority corresponding to the QoS of the sidelink data, and then use the corresponding mode to send and/or receive the sidelink data in the corresponding mode based on the sending and/or receiving order.

It should be understood that the embodiment of the present application does not additionally limit the specific manner in which the first terminal device obtains the priority information. For example, the priority information may be negotiated and determined by multiple terminal devices, or may be specified by a protocol. For example, the first terminal device may be pre-configured with the priority information.

It should also be understood that the present application does not limit a specific level and value of the priority corresponding to each mode. For example, in some embodiments, different modes in the at least two modes correspond to different priorities. For another example, in other embodiments, different modes in the at least two modes may correspond to the same priority. Similarly, the present application does not limit a specific level and value of the priority corresponding to each QoS attribute. For example, in some embodiments, different QoS attributes correspond to different priorities. For another example, in other embodiments, different QoS attributes may correspond to the same priority.

### Embodiment 2:

In the embodiment of the present application, the first terminal device preferentially sends and/or receives sidelink data meeting a first requirement.

The first requirement may include a specific situation of at least one of the following:
a communication mode, a propagation mode, a destination address, a source address, a PSID, an ITS-AID, an access mode, a bearer, a logical channel, a channel condition, a speed, a synchronization type and a carrier.

In other words, the first terminal device can preferentially send and/or receive sidelink data under a specific communication mode and/or a specific propagation mode and/or a specific destination address and/or a specific source address and/or a specific PSID and/or a specific ITS-AID and/or a specific access mode and/or a specific bearer and/or a specific logical channel and/or a specific channel condition and/or a specific speed and/or a specific synchronization type and/or a specific carrier.

For example, the first terminal device can preferentially send and/or receive sidelink data in a specific propagation mode. Specifically, the first terminal device can preferentially send and/or receive sidelink data in a broadcast propagation mode and/or a multicast propagation mode.

Optionally, the first terminal device preferentially sends and/or receives the sidelink data meeting the first requirement in a specific time-frequency domain resource.

In other words, the first requirement is set for the specific time-frequency domain resource. That is, only when sending and/or receiving sidelink data on the specific time-frequency domain resource, the first terminal device preferentially sends and/or receives the sidelink data meeting the first requirement; and when sending and/or receiving sidelink data on resources other than the specific time-frequency domain resource, the first terminal device may not preferentially send and/or receive the sidelink data meeting the first requirement.

The specific time-frequency domain resource is a resource configured by a network and also a pre-configured resource, which is not specifically limited in the embodiment of the present application.

It should be noted that the first terminal device in the embodiment of the present application can preferentially send and/or receive sidelink data in a specific communication mode. For example, the first terminal device can preferentially send and/or receive sidelink data in a first mode of the at least two modes. In other words, the specific time-frequency domain resource is a shared resource of multiple modes in the at least two modes, and further, the first mode has the highest priority. However, the embodiment of the present application is not limited thereto. For example, the specific time-frequency domain resource may also be a dedicated resource of the first mode in the at least two modes.

In other words, when sending and/or receiving the sidelink data on the specific time-frequency domain resource, the first terminal device can only use the first mode in the at least two modes to send and/or receive the sidelink data.

Specifically, the first terminal device can use the first mode to preferentially send sidelink data meeting a second requirement on the specific time-frequency domain resource. The second requirement may include a specific situation of at least one of the following:
a propagation mode, a destination address, a source address, a PSID, an ITS-AID, an access mode, a bearer, a logical channel, a channel condition, a speed, a synchronization type and a carrier.

In other words, the first terminal device can preferentially send and/or receive, in the specific time-frequency domain resource, sidelink data under a specific propagation mode and/or a specific destination address and/or a specific source address and/or a specific PSID and/or a specific ITS-AID and/or a specific access mode and/or a specific bearer and/or a specific logical channel and/or a specific channel condition and/or a specific speed and/or a specific synchronization type and/or a specific carrier.

It should be understood that the embodiment of the present application does not additionally limit a specific type of the first mode. For example, the first mode may be any one of the transmission mode 3, the transmission mode 4 and the mode introduced into Rel-16 described in the above-described embodiments.

It should also be understood that the above-described first embodiment and second embodiment may be used in combination.

That is, the first terminal device can preferentially send and/or receive the sidelink data meeting the first requirement based on the priority information.

For example, the first terminal device can preferentially send and/or receive the sidelink data under the specific communication mode and/or the specific propagation mode and/or the specific destination address and/or the specific source address and/or the specific PSID and/or the specific ITS-AID and/or the specific access mode and/or the specific bearer and/or the specific logical channel and/or the specific channel condition and/or the specific speed and/or the specific synchronization type and/or the specific carrier, according to the priority corresponding to each of the at least two modes.

For another example, the first terminal device can preferentially send and/or receive the sidelink data under the specific communication mode and/or the specific propagation mode and/or the specific destination address and/or the specific source address and/or the specific PSID and/or the specific ITS-AID and/or the specific access mode and/or the specific bearer and/or the specific logical channel and/or the specific channel condition and/or the specific speed and/or the specific synchronization type and/or the specific carrier, according to the priority corresponding to QoS of the sidelink data.

Further, the first terminal device can preferentially send and/or receive the sidelink data meeting the first requirement in the specific time-frequency domain resource according to the priority information.

It should be noted that the sidelink data used for transmission in the at least two modes can also be distinguished according to at least one of the propagation mode, the destination address, the source address, the PSID, the ITS-AID, the access mode, the bearer, the logical channel, the channel condition, the speed, the synchronization type and the carrier. Therefore, factors used to divide the sidelink data can be completely different from factors included in the first requirement, so as to avoid that a conflict occurs in the process of combining the first embodiment and the second embodiment.

Further, even if the technical solutions of the first embodiment and the second embodiment conflict during the combination process, the first terminal device can preferentially adopt the technical solution described in the first embodiment or the technical solution described in the second embodiment.

For example, assuming that in the first embodiment, the first mode of the at least two modes has the highest priority, and the first requirement in the second embodiment includes a specific second mode, the first terminal device can preferentially send and/ or receive the sidelink data in the first mode, or preferentially send and/or receive the sidelink data in the second mode.

The preferred embodiments of the present application are described in detail above with reference to the accompanying drawings. However, the present application is not limited to the specific details in the above-described embodiments. Within the scope of the technical concept of the present application, many simple variants may be made to the technical solutions of the present application. All of these simple variants belong to the protection scope of the present application.

For example, the various specific technical features described in the above-described embodiments may be combined in any suitable manner without contradiction. In order to avoid unnecessary repetition, the present application no longer explains various possible combinations separately.

For another example, the various implementations of the present application can also be combined arbitrarily, as long as they do not violate the idea of the present application, and they should also be regarded as the content disclosed in the present application.

It should be understood that in each method embodiment of the present application, the size of the sequence numbers of the above-described processes does not mean the order of execution. The execution order of the processes should be determined by its function and internal logic, and should not constitute any limitation to the implementation process of the embodiments of the present application.

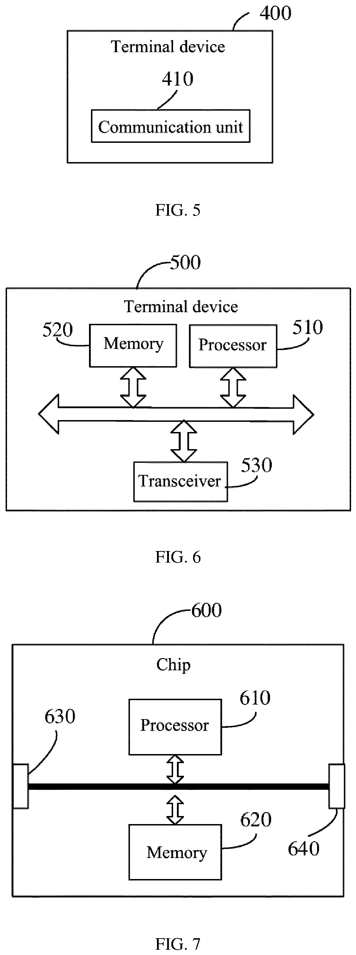

The method embodiments of the present application are described in detail above in conjunction with FIG. 4, and apparatus embodiments of the present application are described in detail below in conjunction with FIG. 5 to FIG. 7.

FIG. 5 is a schematic block diagram of a terminal device 400 according to the invention of the present application.

Specifically, as shown in FIG. 5, the terminal device 400 includes:
a communication unit 410, configured to send and/or receive sidelink data in at least two modes.

In some embodiments of the present application, the at least two modes include at least two of the following modes:
sending and/or receiving of the sidelink data of the terminal device is configured and/or scheduled by a network device; the sending and/or receiving of the sidelink data of the terminal device is configured and/or scheduled by the terminal device; the sending and/or receiving of the sidelink data of the terminal device is configured and/or scheduled by a second terminal device.

In the invention, the at least two modes are respectively used to send and/or receive sidelink data under different situations.

In the invention, the different situations include:
different situations of any one of a propagation mode, a destination address, a source address, a provider service identification PSID, an intelligent transportation systems application identification ITS-AID, a bearer, a logical channel, a channel condition, a speed, a synchronization type and optionally an access method or a carrier.

Optionally, in some embodiments of the present application, the communication unit 410 is specifically configured to:
send and/or receive the sidelink data in the at least two modes according to priority information.

In some embodiments of the present application, the communication unit 410 is further configured to:
determine the priority information according to the at least two modes.

In some embodiments of the present application, different modes in the at least two modes correspond to different priorities.

In some embodiments of the present application, the communication unit 410 is further configured to:
determine the priority information according to the sidelink data.

In some embodiments of the present application, different quantity of service QoS attributes of the sidelink data correspond to different priorities.

In some embodiments of the present application, the communication unit 410 is specifically configured to:
preferentially send and/or receive sidelink data meeting a first requirement.

In some embodiments of the present application, the first requirement includes a specific situation of at least one of the following:
a communication mode, a propagation mode, a destination address, a source address, a provider service identification PSID, an intelligent transportation system application identification ITS-AID, an access mode, a bearer, a logical channel, a channel condition, a speed, a synchronization type and a carrier.

In some embodiments of the present application, the communication unit 410 is more specifically configured to:
preferentially send and/or receive the sidelink data meeting the first requirement in a specific time-frequency domain resource.

In some embodiments of the present application, the specific time-frequency domain resource is a resource configured by a network.

In some embodiments of the present application, the specific time-frequency domain resource is a pre-configured resource.

In some embodiments of the present application, the specific time-frequency domain resource is a dedicated resource of a first mode of the at least two modes.

In some embodiments of the present application, the specific time-frequency domain resource is a shared resource of multiple modes in the at least two modes.

It should be understood that the apparatus embodiments and the method embodiments may correspond to each other, and the method embodiments may be referred to for similar descriptions. Specifically, the terminal device 400 shown in FIG. 5 may correspond to a corresponding entity that executes the method 300 according to the embodiment of the present application, and the foregoing and other operations and/or functions of each unit in the terminal device 400 are respectively intended to implement the corresponding process in each method of FIG. 4, which will not be repeated here for the sake of brevity,

The terminal device according to the embodiment of the present application is described above from the perspective of the functional module in conjunction with FIG. 5. It should be understood that the functional module may be implemented in the form of hardware, may also be implemented through instructions in the form of software, and may also be implemented in a combination of hardware and software modules.

Specifically, the steps of the method embodiments in the embodiments of the present application may be implemented by an integrated logic circuit of hardware in a processor and/or instructions in the form of software, and the steps of the methods disclosed in combination with the embodiments of the present application may be directly embodied as being executed and completed by a hardware decoding processor, or being executed and completed by a combination of hardware and software modules in a decoding processor.

Optionally, the software modules may be located in a mature storage medium in the field, such as a random access memory, a flash memory, a read-only memory, a programmable read-only memory, an electrically erasable programmable memory, a register, etc. The storage medium is located in the memory, and the processor reads information in the memory and completes the steps of the above method embodiments in combination with its hardware.

For example, in the embodiment of the present application, the communication unit 410 shown in FIG. 5 may be implemented by a transceiver.

FIG. 6 is a schematic structural diagram of a terminal device 500 according to an embodiment of the present application. The terminal device 500 shown in FIG. 6 includes a processor 510, which can call and run a computer program from a memory to implement the methods according to the embodiments of the present application.

Optionally, as shown in FIG. 6, the terminal device 500 can further include a memory 520. The memory 520 can be configured to store instruction information, and can further be configured to store codes, instructions and the like that are executed by the processor 510. The processor 510 can call and run a computer program from the memory 520 to implement the methods according to the embodiments of the present application.

The memory 520 may be a separate device independent of the processor 510, or may be integrated in the processor 510.

Optionally, as shown in FIG. 6, the terminal device 500 can further include a transceiver 530, and the processor 510 can control the transceiver 530 to communicate with other devices, and specifically, to send information or data to other devices, or receive information or data sent by other devices.

The transceiver 530 can include a transmitter and a receiver. The transceiver 530 can further include an antenna, and the number of the antenna may be one or more.

Optionally, the terminal device 500 can implement the corresponding processes implemented by the terminal device in the methods according to the embodiments of the present application, that is, the terminal device 500 according to the embodiment of the present application may correspond to the terminal device 400 according to the embodiment of the present application, and may correspond to the corresponding entity that executes the method 300 according to the embodiment of the present application. For the sake of brevity, details are not described here again.

It should be understood that various components in the terminal device 500 are connected by a bus system, where in addition to a data bus, the bus system further includes a power bus, a control bus and a status signal bus.

In addition, according to an embodiment of the present application, a chip is further provided. The chip may be an integrated circuit chip with capability of signal processing and can implement or execute the methods, steps and logical block diagrams disclosed in the embodiments of the present application.

Optionally, the chip can be applied to various communication devices, so that a communication device installed with the chip can execute the methods, steps and logical block diagrams disclosed in the embodiments of the present application.

FIG. 7 is a schematic structural diagram of a chip according to an embodiment of the present application.

The chip 600 shown in FIG. 7 includes a processor 610, where the processor 610 can call a computer program from the memory and run the computer program to implement the methods according to the embodiments of the present application.

Optionally, as shown in FIG. 7, the chip 600 can further include a memory 620. The processor 610 can call a computer program from the memory 620 and run the computer program to implement the methods according to the embodiments of the present application. The memory 620 can be configured to store instruction information, and can further be configured to store codes, instructions and the like that are executed by the processor 610.

The memory 620 may be a separate device independent of the processor 610, or may be integrated in the processor 610.

Optionally, the chip 600 can further include an input interface 630, where the processor 610 can control the input interface 630 to communicate with other devices or chips, which specifically, to obtain information or data sent by other devices or chips.

Optionally, the chip 600 can further include an output interface 640, where the processor 610 can control the output interface 640 to communicate with other devices or chips, which specifically, to output information or data to other devices or chips.

Optionally, the chip 600 can be applied to the terminal devices according to the embodiments of the present application, and the chip can implement the corresponding processes implemented by the terminal device in the methods according to the embodiments of the present application. For the sake of brevity, details are not described here again.

It should be understood that the chip mentioned in the embodiments of the present application may also be referred to as a system-level chip, a system chip, a chip system or a system on chip. It should also be understood that various components in the chip 600 are connected by a bus system, where in addition to a data bus, the bus system further includes a power bus, a control bus and a status signal bus.

The processor may include but is not limited to:
a general-purpose processor, a digital signal processor (DSP), an application specific integrated circuit (ASIC), a field programmable gate array (FPGA) or other programmable logic devices, discrete gates or transistor logic devices, discrete hardware components, etc.

The processor can be configured to implement or execute the methods, steps, and logical block diagrams disclosed in the embodiments of the present application. The steps of the methods disclosed in combination with the embodiments of the present application may be directly embodied as being executed and completed by a hardware decoding processor, or by a combination of hardware and software modules in a decoding processor. The software modules may be located in a mature storage medium in the field, such as a random access memory, a flash memory, a read-only memory, a programmable read-only memory or an erasable programmable memory, a register, etc. The storage medium is located in the memory, and the processor reads information in the memory and completes the steps of the above-described methods in combination with its hardware.

The memory includes but is not limited to:
a volatile memory and/or a non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM) that is used as an external cache. By way of exemplary but not restrictive description, many forms of RAMs are available, such as a static RAM (SRAM), a dynamic RAM (DRAM), a Synchronous DRAM (SDRAM), a double data rate SDRAM (DDR SDRAM), an enhanced SDRAM (ESDRAM), a synch link DRAM (SLDRAM) and a direct rambus RAM (DR RAM).

It should be noted that the memories of the systems and methods described herein are intended to include, but be not limited to, these and any other suitable types of memories.

According to an embodiment of the present application, a computer-readable storage medium is further provided, and is configured to store a computer program. The computer-readable storage medium stores one or more programs, and the one or more programs include instructions that, when executed by a portable electronic device including multiple application programs, can cause the portable electronic device to execute the method according to the embodiment shown in the method 300.

Optionally, the computer-readable storage medium can be applied to the mobile terminals/terminal devices in the embodiments of the present application, and the computer program enables a computer to execute the corresponding processes implemented by the mobile terminals/terminal devices in the methods according to the embodiments of the present application, which for the sake of brevity, will not be repeated here.

According to an embodiment of the present application, a computer program product including a computer program is further provided.

Optionally, the computer program product can be applied to the mobile terminals/terminal devices in the embodiments of the present application, and the computer program causes a computer to execute the corresponding processes implemented by the mobile terminals/terminal devices in the methods of the embodiments of the present application, which for the sake of brevity, will not be repeated here.

According to an embodiment of the present application, a computer program is further provided. When the computer program is executed by a computer, the computer is enabled to execute the method according to the embodiment shown in method 300.

It should be noted that the term "system" and the like herein may also be referred to as "network management architecture" or "network system" etc.

It should also be understood that the terms used in the embodiments of the present application and the appended claims are only for the purpose of describing specific embodiments, and are not intended to limit the embodiments of the present application.

For example, the singular forms of "a", "the", "above-described" and "this" used in the embodiments of the present application and the appended claims are also intended to include plural forms, unless the context clearly indicates other meanings.

Those skilled in the art may realize that the units and algorithm steps of each example described in combination with the embodiments disclosed herein can be implemented by electronic hardware or a combination of computer software and electronic hardware. Whether these functions are executed exactly by hardware or software depends on the specific application and design constraints of the technical solution. Professional technicians may use different methods to implement the described functions for each specific application, but this implementation should not be considered as beyond the scope of the embodiments of this application.

If implemented in the form of software function units and sold or used as a stand-alone product, it may be stored in a computer readable storage medium. Based on such understanding, the essence or the part contributing to the prior art or part of the technical solutions of the embodiments of the present application may be embodied in a form of software product, and the computer software product is stored in a storage medium, including several instructions for causing a computer device (which may be a personal computer, a server, or a network device, etc.) to execute all or part of the steps of the methods described in the embodiments of the present application. The foregoing storage medium includes a medium capable of storing program codes, such as: a U disk, a mobile hard disk, a read-only memory, a random access memory, a magnetic disk, or an optical disk, or the like.

Those skilled in the art may clearly understand that, for convenient and concise description, the corresponding processes in the foregoing method embodiments may be referred to for the specific working processes of the above-described systems, apparatuses and units, and are not described here again in detail.

In the several embodiments provided in the present application, it should be understood that the disclosed systems, apparatuses and methods may be implemented in other ways.

For example, the division of units or modules or components in the apparatus embodiments described above is only a logical functional division, and there may be other division manners in actual implementation. For example, multiple units or modules or components may be combined or integrated to another system, or some units or modules or components may be ignored or not executed.

For another example, the above units/modules/components described as separate/display parts may or may not be physically separated. That is, they may be located in one place, or may also be distributed on multiple network units. Some or all of the units/modules/components may be selected according to actual needs to achieve the objective of the embodiments of the present application.

Finally, it should be noted that the mutual coupling or direct coupling or communication connection shown or discussed above may be indirect coupling or communication connection through some interfaces, apparatuses or units, and may be in electrical, mechanical or other forms.

The above content is only the specific implementations of the embodiments of the present application, and the protection scope of the embodiments of the application is not limited thereto. The scope of the invention is solely defined by the claims.

## Claims

1. A wireless communication method (300), comprising:
sending and/or receiving (S310), by a first terminal device, sidelink data in at least two modes, the method **characterized in that**
the at least two modes are used to send and/or receive sidelink data under different situations, respectively; wherein the different situations comprise:
different situations of any one of a destination address, a source address, provider service identification, PSID, an intelligent transportation systems application identification, ITS-AID, a bearer, a logical channel, a channel condition, a speed and a synchronization type.

2. A terminal device (400), comprising:
a communication unit (410), configured to send and/or receive sidelink data in at least two modes, the terminal device **characterised in that**
the at least two modes are used to send and/or receive sidelink data under different situations, respectively; wherein the different situations comprise:
different situations of any one of a destination address, a source address, provider service identification, PSID, an intelligent transportation systems application identification, ITS-AID, a bearer, a logical channel, a channel condition, a speed and a synchronization type.

3. The terminal device according to claim 2, wherein the at least two modes comprise at least two of the following modes:
sending and/or receiving of the sidelink data of the terminal device (400) is configured and/or scheduled by a network device;
the sending and/or receiving of the sidelink data of the terminal device (400) is configured and/or scheduled by the terminal device;
the sending and/or receiving of the sidelink data of the terminal device (400) is configured and/or scheduled by a second terminal device.

4. The terminal device according to claim 1, wherein the different situations further comprise:
different situations of any one of a propagation mode, an access mode and a carrier.

5. The terminal device according to any one of claims 2 to 4, wherein the communication unit (410) is specifically configured to:
send and/or receive the sidelink data in the at least two modes according to priority information.

6. The terminal device according to claim 5, wherein the communication unit (410) is further configured to:
determine the priority information according to the at least two modes.

7. The terminal device according to claim 6, wherein different modes in the at least two modes correspond to different priorities.

8. The terminal device according to any one of claims 5 to 7, wherein the communication unit is further configured to:
determine the priority information according to the sidelink data.

9. The terminal device according to any one of claims 5 to 8, wherein different quantity of service, QoS, attributes of the sidelink data correspond to different priorities.

10. The terminal device according to any one of claims 2 to 9, wherein the communication unit (410) is specifically configured to:
preferentially send and/or receive sidelink data meeting a first requirement.

11. The terminal device according to claim 10, wherein the first requirement comprises a specific situation of at least one of the following:
a communication mode, a propagation mode, a destination address, a source address, a provider service identification, PSID, an intelligent transportation systems application identification, ITS-AID, an access mode, a bearer, a logical channel, a channel condition, a speed, a synchronization type and a carrier.

12. The terminal device according to claim 10 or 11, wherein the communication unit (410) is more specifically configured to:
preferentially send and/or receive the sidelink data meeting the first requirement in a specific time-frequency domain resource.

13. The terminal device according to claim 12, wherein the specific time-frequency domain resource is a resource configured by a network, or
the specific time-frequency domain resource is a preconfigured resource, or
the specific time-frequency domain resource is a dedicated resource of a first mode in the at least two modes, or
the specific time-frequency domain resource is a shared resource of multiple modes in the at least two modes.

14. A computer-readable storage medium, configured to store a computer program which causes a computer to execute the method according to claim 1.

## Patentansprüche

1. Drahtloskommunikationsverfahren (300), Folgendes umfassend:
Senden und/oder Empfangen (S310), durch ein erstes Endgerät, von Sidelink-Daten in mindestens zwei Betriebsarten, das Verfahren **dadurch gekennzeichnet, dass**
die mindestens zwei Betriebsarten verwendet werden, um Sidelink-Daten in verschiedenen Situationen zu senden bzw. zu empfangen; wobei die verschiedenen Situationen folgende umfassen:
verschiedene Situationen einer beliebigen aus einer Zieladresse, einer Quelladresse, einer Anbieterdienstidentifikation, PSID, einer intelligenten Transportsysteme-Anwendungsidentifikation, ITS-AID, eines Übermittlers, eines logischen Kanals, einer Kanalbedingung, einer Geschwindigkeit und einer Synchronisationsart.

2. Endgerät (400), Folgendes umfassend:
eine Kommunikationseinheit (410), die konfiguriert ist, um Sidelink-Daten in mindestens zwei Betriebsarten zu senden und/oder zu empfangen, das Endgerät **dadurch gekennzeichnet, dass**
die mindestens zwei Betriebsarten verwendet werden, um Sidelink-Daten in verschiedenen Situationen zu senden bzw. zu empfangen; wobei die verschiedenen Situationen folgende umfassen:
verschiedene Situationen einer beliebigen aus einer Zieladresse, einer Quelladresse, einer Anbieterdienstidentifikation, PSID, einer intelligenten Transportsysteme-Anwendungsidentifikation, ITS-AID, eines Übermittlers, eines logischen Kanals, einer Kanalbedingung, einer Geschwindigkeit und einer Synchronisationsart.

3. Endgerät nach Anspruch 2, wobei die mindestens zwei Betriebsarten mindestens zwei der folgenden Betriebsarten umfassen:
Senden und/oder Empfangen der Sidelink-Daten des Endgeräts (400) wird durch eine Netzwerkvorrichtung konfiguriert und/oder eingeplant;
Senden und/oder Empfangen der Sidelink-Daten des Endgeräts (400) wird durch das Endgerät konfiguriert und/oder eingeplant;
Senden und/oder Empfangen der Sidelink-Daten des Endgeräts (400) wird durch ein zweites Endgerät konfiguriert und/oder eingeplant;

4. Endgerät nach Anspruch 1, wobei die verschiedenen Situationen weiterhin folgende umfassen:
verschiedene Situationen einer beliebigen einer Ausbreitungsbetriebsart, einer Zugangsbetriebsart und eines Trägers.

5. Endgerät nach einem der Ansprüche 2 bis 4, wobei die Kommunikationseinheit (410) insbesondere konfiguriert ist, um:
die Sidelink-Daten in den mindestens zwei Betriebsarten gemäß Prioritätsinformationen zu senden und/oder zu empfangen.

6. Endgerät nach Anspruch 5, wobei die Kommunikationseinheit (410) weiterhin konfiguriert ist, um:
die Prioritätsinformationen gemäß den mindestens zwei Betriebsarten zu bestimmen.

7. Endgerät nach Anspruch 6, wobei verschiedene Betriebsarten in den mindestens zwei Betriebsarten verschiedenen Prioritäten entsprechen.

8. Endgerät nach einem der Ansprüche 5 bis 7, wobei die Kommunikationseinheit weiterhin konfiguriert ist, um:
die Prioritätsinformationen gemäß den Sidelink-Daten zu bestimmen.

9. Endgerät nach einem der Ansprüche 5 bis 8, wobei verschiedene Dienstquantitätsattribute, QoS-Attribute, der Sidelink-Daten verschiedenen Prioritäten entsprechen.

10. Endgerät nach einem der Ansprüche 2 bis 9, wobei die Kommunikationseinheit (410) insbesondere konfiguriert ist, um:
vorzugsweise Sidelink-Daten zu senden und/oder zu empfangen, die eine erste Anforderung erfüllen.

11. Endgerät nach Anspruch 10, wobei die erste Anforderung eine spezifische Situation aus mindestens einer der folgenden umfasst:
einer Kommunikationsbetriebsart, einer Ausbreitungsbetriebsart, einer Zieladresse, einer Quelladresse, einer Anbieterdienstidentifikation, PSID, einer intelligenten Transportsysteme-Anwendungsidentifikation, ITS-AID, einer Zugangsbetriebsart, eines Übermittlers, eines logischen Kanals, einer Kanalbedingung, einer Geschwindigkeit, einer Synchronisationsart und eines Trägers.

12. Endgerät nach Anspruch 10 oder 11, wobei die Kommunikationseinheit (410) insbesondere konfiguriert ist, um:
vorzugsweise die Sidelink-Daten zu senden und/oder zu empfangen, welche die erste Anforderung in einer spezifischen Zeit-Frequenzdomänenressource erfüllen.

13. Endgerät nach Anspruch 12, wobei die spezifische Zeit-Frequenzdomänenressource eine Ressource ist, die durch ein Netzwerk konfiguriert ist, oder
die spezifische Zeit-Frequenzdomänenressource eine vorkonfigurierte Ressource ist oder
die spezifische Zeit-Frequenzdomänenressource eine dedizierte Ressource einer ersten Betriebsart in den mindestens zwei Betriebsarten ist oder
die spezifische Zeit-Frequenzdomänenressource eine gemeinsam genutzte Ressource mehrerer Betriebsarten in den mindestens zwei Betriebsarten ist.

14. Computerlesbares Speichermedium, das konfiguriert ist, um ein Computerprogramm zu speichern, das bewirkt, dass ein Computer das Verfahren nach Anspruch 1 ausführt.

## Revendications

1. Procédé de communication sans fil (300), comprenant :
l'envoi et/ou la réception (S310), par un premier dispositif terminal, de données de liaison latérale dans au moins deux modes, le procédé étant **caractérisé en ce que**
les au moins deux modes sont utilisés pour envoyer et/ou recevoir des données de liaison latérale dans différentes situations, respectivement ; dans lequel les différentes situations comprennent :
différentes situations parmi l'une quelconque d'une adresse de destination, d'une adresse source, d'une identification de fournisseur de services, PSID, d'une identification d'application de systèmes de transport intelligents, ITS-AID, d'un support, d'un canal logique, d'un état de canal, d'une vitesse et d'un type de synchronisation.

2. Dispositif terminal (400), comprenant :
une unité de communication (410), configurée pour envoyer et/ou recevoir des données de liaison latérale dans au moins deux modes, le dispositif terminal étant **caractérisé en ce que**
les au moins deux modes sont utilisés pour envoyer et/ou recevoir des données de liaison latérale dans différentes situations, respectivement ; dans lequel les différentes situations comprennent :
différentes situations parmi l'une quelconque d'une adresse de destination, d'une adresse source, d'une identification de fournisseur de services, PSID, d'une identification d'application de systèmes de transport intelligents, ITS-AID, d'un support, d'un canal logique, d'un état de canal, d'une vitesse et d'un type de synchronisation.

3. Dispositif terminal selon la revendication 2, dans lequel les au moins deux modes comprennent au moins deux des modes suivants :
l'envoi et/ou la réception des données de liaison latérale du dispositif terminal (400) est configuré(e) et/ou programmé(e) par un dispositif de réseau ;
l'envoi et/ou la réception des données de liaison latérale du dispositif terminal (400) est configuré(e) et/ou programmé(e) par le dispositif terminal ;
l'envoi et/ou la réception des données de liaison latérale du dispositif terminal (400) est configuré(e) et/ou programmé(e) par un second dispositif terminal.

4. Dispositif terminal selon la revendication 1, dans lequel les différentes situations comprennent en outre :
différentes situations parmi l'un quelconque d'un mode de propagation, d'un mode d'accès et d'une porteuse.

5. Dispositif terminal selon l'une quelconque des revendications 2 à 4, dans lequel l'unité de communication (410) est spécifiquement configurée pour :
envoyer et/ou recevoir les données de liaison latérale dans les au moins deux modes en fonction d'informations de priorité.

6. Dispositif terminal selon la revendication 5, dans lequel l'unité de communication (410) est en outre configurée pour :
déterminer les informations de priorité en fonction des au moins deux modes.

7. Dispositif terminal selon la revendication 6, dans lequel différents modes parmi les au moins deux modes correspondent à différentes priorités.

8. Dispositif terminal selon l'une quelconque des revendications 5 à 7, dans lequel l'unité de communication est en outre configurée pour :
déterminer les informations de priorité en fonction des données de liaison latérale.

9. Dispositif terminal selon l'une quelconque des revendications 5 à 8, dans lequel différents attributs de qualité de service, QoS, des données de liaison latérale correspondent à différentes priorités.

10. Dispositif terminal selon l'une quelconque des revendications 2 à 9, dans lequel l'unité de communication (410) est spécifiquement configurée pour :
de préférence envoyer et/ou recevoir des données de liaison latérale satisfaisant une première exigence.

11. Dispositif terminal selon la revendication 10, dans lequel la première exigence comprend une situation spécifique parmi au moins l'une des suivantes :
un mode de communication, un mode de propagation, une adresse de destination, une adresse source, une identification de fournisseur de services, PSID, une identification d'application de systèmes de transport intelligents, ITS-AID, un support, un canal logique, un état de canal, une vitesse, un type de synchronisation et une porteuse.

12. Dispositif terminal selon la revendication 10 ou 11, dans lequel l'unité de communication (410) est spécifiquement configurée pour :
de préférence envoyer et/ou recevoir des données de liaison latérale satisfaisant la première exigence dans une ressource spécifique du domaine temps-fréquence.

13. Dispositif terminal selon la revendication 12, dans lequel la ressource spécifique du domaine temps-fréquence est une ressource configurée par un réseau, ou
la ressource spécifique du domaine temps-fréquence est une ressource préconfigurée, ou
la ressource spécifique du domaine temps-fréquence est une ressource dédiée d'un premier mode des au moins deux modes, ou
la ressource spécifique du domaine temps-fréquence est une ressource partagée de multiples modes des au moins deux modes.

14. Support de stockage lisible par ordinateur, configuré pour stocker un programme informatique qui amène un ordinateur à exécuter le procédé selon la revendication 1.
